# EUROPEAN PATENT SPECIFICATION

(11) **EP 1 093 445 B1**
(45) Date of publication and mention of the grant of the patent: **03.12.2003**
(21) Application number: 98924356.3
(22) Date of filing: 08.06.1998
(51) Int. Cl.: C04B 7/147, C04B 28/08, C04B 111/74

(54) **METHOD AND GROUTING COMPOSITION FOR FILLING CRACKS IN STONE AND CONCRETE CONSTRUCTIONS**
VERFAHREN UND INJIZIERBARE ZUSAMMENSETZUNG ZUR FÜLLUNG VON RISSEN IN STEIN- UND BETONKONSTRUKTIONEN
PROCEDE ET COMPOSITION DE MORTIER PERMETTANT DE COLMATER DES FISSURES DANS LES CONSTRUCTIONS EN PIERRE ET EN BETON

(43) Date of publication of application: 25.04.2001
(73) Proprietor: Contesta Oy, 01600 Vantaa (FI)
(72) Inventor: KLINGSTEDT, Gunnar, FIN-01650 Vanda (FI); SCHADEWITZ, Aki, FIN-01620 Vantaa (FI)
(74) Representative: Sundman, Christoffer
(86) International application number: FI9800488
(87) International publication number: WO99067183

(56) References cited:
- US-A- 4 761 183
- US-A- 5 554 218
- PATENT ABSTRACTS OF JAPAN vol. 15, no. 181 (C-0830) 09 May 1991 & JP 03 045 545 A (NIPPON STEEL CORP) 27 February 1991
- DATABASE WPI Week 9735, Derwent Publications Ltd., London, GB; AN 1997-381444, XP002938206 & JP 9 165 576 A (MITSUI TOATSU CHEM INC) 24 June 1997

## Description

The present invention relates to a method according to the preamble of claim 1 for filling cracks in stone and concrete structures. According to such a method the cracks are filled with a composition containing a binder achieving hardening of the composition under the influence of water, whereby the cracks are caulked.

The invention also relates to a grouting composition according to the preamble of claim 17.

A large number of stone and concrete structures are in constant contact with running or dammed water. Such structures are found in e.g. hydropower stations, dams and docks. Crack formation may occur in these structures for different reasons. The water will then penetrate the structures and extract lime and soluble salts as well as other chemical compounds from concrete and mortar layers. Therefore, in the long run these cracks will become increasingly water-carrying; they significantly reduce the strength of the structure and give rise to leakage through the entire structure. Cracks in a hydropower station dam can incur costs of several million marks because of the water that is wasted.

Similar water-carrying cracks may even occur in the actual bedrock in connection with the concrete and stone structures, especially if the bedrock contains calcareous minerals.

Up to now, cracks in stone and concrete structures have mainly been filled in three different ways:

According to the conventional method the entire water-filled area which has been in contact with the structure has been drained whereafter repairing work has been carried out using the same or a similar material as was used when the structure was erected, for example by inserting new grout into seams between hewn stone blocks or by filling cracks and cavities in concrete structures with repair concrete. The conventional method comprises the construction of coffer dams and drainage pumping for the purpose of draining and for total or partial dewatering. The disadvantage hampering this method is that it is very costly because a lot of water is wasted in the dewatering, and the plant must be either totally or partly decommissioned while repair work is being done.

Various rapidly setting grouts have therefore been used for some time now for filling cracks. The method is based on drilling a number of elongated holes in the construction. In order to make sure that a sufficient number of cracks are really reached the entire structure is holed with even spacings and to a sufficient depth, most often all the way down to the bedrock and sometimes even into the bedrock if it is suspected that there are cracks in the bedrock. Next, a grouting composition is pumped in which is forced into the cracks via the holes. The pumping is continued until an even and high pressure is attained, whereafter the pressure is kept up until the composition has hardened.

As grouting compositions, both mixes based on hydraulic binders, such as cement, and synthetic mixes are used, the latter containing reactive components, for instance diisocyanate or methyl methacrylate monomers which induce polymerization and crossbinding reactions in the mix under the influence of water.

The known grouting compositions are afflicted with a number of problems. The most serious one is the difficulty of getting the composition to fasten in the cracks under the influence of a strong flow of water. Instead of getting the composition to harden when contacted with water, too strong a flow leads to the composition being diluted such that it is washed out. Many of the monomeric components in synthetic compositions are very poisonous when in contact with skin and may emit harmful or irritating vapours. Thus they constitute a potential environmental risk in such situations.

The aim of the present invention is to eliminate the problems relating to the prior art and to achieve a novel method for repairing cracks in power plant constructions, in the bedrock and in similar places where it is desired to fill water-carrying crack formations in or in connection with a surrounding stone or concrete material.

It is a further aim of the invention to provide a novel grouting composition which can advantageously be used for filling cracks and joints where strong water flows occur.

The invention is based on the notion of using a latent hydraulic binder as binder in the grouting composition, in the first place ground, granulated blast-furnace slag. In order for the slag to achieve a hardening of the composition, an alkaline component is added which will activate the slag. The grouting composition according to the invention contains even aggregate in the form of granule and/or a filler, such as a natural filler or a synthetic filler, as well as plasticizers and viscosity-promoting agents, whereby a plastic to totally fluid consistency is obtained. Concrete compositions and grouts containing blast-furnace slag as binder are known as such, but so far the use of slag-based grouting compositions has not been suggested in the literature for the purposes according to the invention.

The grouting composition according to the invention can be used in the conventional manner by providing the structure which is to be repaired with a large number of elongated holes which are filled with composition by injecting it under pressure. It can, however, also be used for repairing under-water structures by extruding.

More specifically, the method according to the invention is characterized by what is stated in the characterizing part of claim 1.

The grouting composition according to the invention, then, is characterized by what is stated in the characterizing part of claim 17.

The invention offers a number of considerable benefits. Thus the composition can be easily formulated to a suitable viscosity determined by the intended use by varying the relative amounts of binder, activator and aggregate. The grouting composition has excellent anti-wash-out properties, wherefore it can even be used for filling cracks exposed to strong flows of water. The use of blast-furnace slag as binder provides a more viscous mixture having better cohesion than traditional cement-based repair materials. The composition provides rapid hardening which is important when water-carrying cracks are being repaired. Even a rapid improvement of the strength properties is achieved such that it is about 20 MPa after 24 hours.

The method and the grouting composition according to the invention can, as stated above, be exploited for a large number of purposes. The most important uses are under-water repair of joints, cracks and cavities by extrusion of the composition, as well as cementing cracks and hollows under water in dams, tunnels and the like for sealing and strengthening. In the present invention, all of these purposes are covered by the notion of "repairing cracks in stone and concrete structures", whereby the aim is to make the cracks watertight.

In the following, the invention is examined in closer detail with the aid of a detailed description and with reference to a number of exemplifying embodiments.

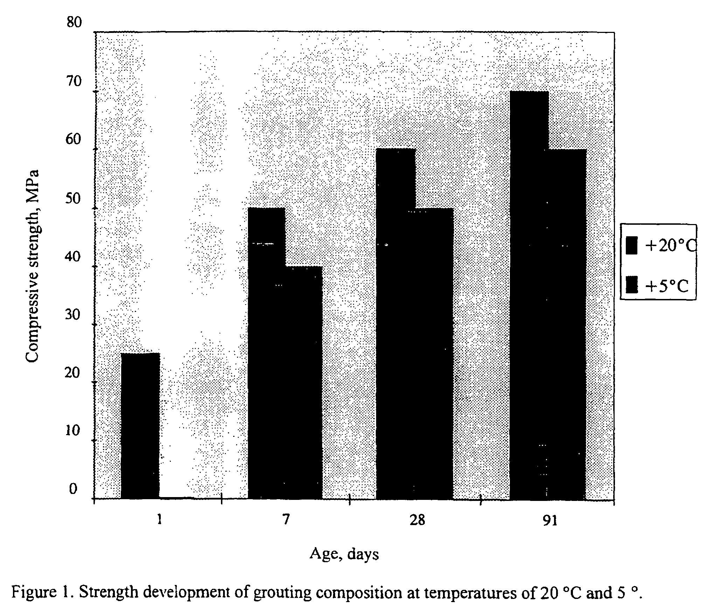

The increase in the strength of a grouting composition according to the invention is shown in Fig. 1 as a function of time at two different temperatures.

The invention is based on the use of a slag-based mix which is most suitably characterized as a grout or a cement grout. Within the scope of the present invention the composition is termed a "grouting composition" which term is naturally to be understood as comprising all mixtures meeting the requirements concerning composition and flowing property defined in the present invention, independent of the range of use.

Generally speaking the grouting composition according to the invention contains the following components:
- a latent hydraulic binder, in particular blast-furnace slag obtained during the production of cast iron,
- an alkaline agent (even termed "an alkaline component"), such as a hydroxide, a carbonate or a hydrocarbonate of an alkali metal or alkaline earth metal or an alkaline silicate (e.g. water-glass),
- aggregate having a small particle size,
- additives and admixtures capable of modifying the consistency, viscosity and other such properties of the composition, and
- water for mixing the composition.

The composition is rich in binding agent in relation to the aggregate, meaning that the amount of binder amounts to about 15 to 80 %, preferably about 20 to 50 % of the combined weight of the binder and the aggregate.

The blast-furnace slag is especially a ground and granulated slag having a specific surface (Blaine) of between about 100 and 1000 m²/kg, in particular about 200 to 800 m²/kg. The reactivity and the hydraulic properties of the slag vary to some extent depending on its origin. Generally speaking the hydraulic properties are dependent on the glass content of the slag and a value of 95 % is desirable according to the literature.

It is known that the hydration and hardening of slag is slow wherefore alkaline components, in this context divided into accelerators and activators, are added to slag-based binder compositions. The above-mentioned hydroxides, carbonates and hydrocarbonates are typical accelerators, whereas activators include the alkaline silicates (e.g. water-glass). Also cement clinker (e.g. Portland cement), slaked and unslaked lime and calcium sulphate compounds, such as gypsum and anhydrite, count as accelerators. Even mixtures of the above-cited alkaline agents can be exploited. Accelerators of particular importance are alkali metal carbonates and hydroxides while alkali metal silicates are important activators, possibly in combination with for example cement clinker.

As a specific example of possible activators, sodium silicate solutions having densities of approximately 1.3 to 1.5 kg/dm³ and a ratio between sodium oxide and silica (Na₂O/SiO₂) of approximately 1:3 to 1:4, can be cited. A suitable accelerator is a concentrated aqueous solution of sodium hydroxide having a concentration of 20 to 60 % by weight, in particular approximately 40 to 50 % by weight. The activator/accelerator charge amounts to about 0.1 to 10 %, preferably about 0.5 to 7 % of the slag (dry weight/dry weight). If Portland cement is used as the only accelerator, the added amount is advantageously about 1 to 20 %.

When mixtures containing activators and accelerators are used the weight ratio between these is usually 1:10...10:1, in particular 1:1...5:1.

The present composition differs from conventional cement-based grouting compositions as regards the binder (ground granulated blast-furnace slag instead of Portland cement). Another essential difference lies in that the composition also contains aggregate. The aggregate may consist of granule having a coarseness of 0 to 8 mm or for example two different classes of coarseness of 0 to 0.6 mm and 0.5 to 1.2 mm, or generally of granule having particle sizes of less than 1.6 mm, in particular less than 1.2 mm. According to the invention, at least 50 %, advantageously at least 80 %, in particular at least 90 % and preferably at least 95 % of the aggregate has a particle size of less than 1.6 mm. Instead of the granule or mixed therewith the composition may even contain conventional fillers, such as natural fillers (d < 0.25 mm), fly ash (PFA) or some other synthetic filler. It should be noted that fly ash does not react with blast-furnace slag because the slag does not contain a sufficient amount of lime; in other words, the situation differs from the case of Portland cement where the fly ash is responsible for a pozzolana effect.

The fly ash provides an increased flowing ability of the composition, which in part is due to the spherical form of the fly ash particles.

As a rule, if the aggregate consists of particles of varying degrees of fineness, the finer part constitutes the main part of the aggregate; the ratio between the finer and the coarser part can thus be approximately 100:1 to 1.01:1.

In addition to the above-mentioned components, the grouting composition according to the invention also contains agents which provide an improved consistency and control the viscosity (additives and admixtures) whose task it is, among other things, to adjust the properties of the composition, as is known, the reactions of the slag are to some extent unpredictable, and to achieve an improved toughness and adhesion of the composition.

The following modifying agents are optional but advantageous adjuvants which together amount to about 0.1 to 10 % by weight of the total weight of the rest of the components of the composition: silica powder, cellulose derivatives, stearates, bentonite and fibres.

The silica powder comprises finely divided silicon dioxide (silica) having a large specific surface.

The viscosity can be regulated by means of cellulose derivatives, such as cellulose ethers and esters. The derivatives provide enhanced toughness and inner cohesion. The following cellulose derivatives are particularly worth being mentioned; hydroxy ethyl and hydroxy propyl cellulose, carboxy methyl cellulose and ethyl cellulose and methyl cellulose and hydroxy alkylated derivatives thereof (e.g. hydroxy propyl methyl cellulose, hydroxy ethyl methyl cellulose and hydroxy butyl methyl cellulose).

Also salts of stearic acid, for example salts of alkali metals or alkali earth can be used as admixtures. Calcium stearate is an example of a suitable viscosity regulator.

The grouting compositions can also contain bentonite-based consistency promoters (e.g. alkali metal salts or alkali earth salts of bentonite, such as sodium or calcium bentonite) which will resist shrinkage which of course is most harmful with regard to the filling of the cracks.

Fibres are used to increase the impact strength of the composition. The fibres can be natural fibres of polymer fibres, such as thermoplastics (e.g. polypropylene and polyesters, such as PET and PBT and PEN).

One or more of the above-cited modifying agents can be used, whereby the total charge amounts to about 0.01 to 10 %, advantageously 0.1 to 5 % of the dry weight of binder and aggregate. The silica powder, if used, is usually present in an amount of more than 50 % of the total amount of additives, while the shares of the other components are about 5 to 20 %.

Of the admixtures, flowability regulators such as lignosulphonate or other sulphonating polyelectrolytes as well as condensation products of formaldehyde and melamine, formaldehyde and naphthalene can be mentioned. The purpose of the flowability regulators is to reduce the water/binder ratio. The use of flowability regulators is extremely important to prevent a premature hardening of the composition. The amount of flowability regulator is approximately 0.1 to 5.0 % by weight of the binder.

The amount of water/binder in the grouting composition according to the invention is about 0.1 to 0.7, the w/c ratio being in particular = 0.20 to 0.30, for instance about 0.25 to 0.28.

The grouting composition is generally composed of the following:
- 1 to 5 parts by weight of an aggregatehaving a particle size of 0 to 0.6 mm,
- 1 to 3 parts by weight of ground, granulated blast-furnace slag,
- 0.1 to 1 parts by weight of an alkaline component (accelerator and/or activator),
- 0.01 to 1 parts by weight of an additive and possibly an admixture and
- 0.1 to 2 parts by weight of mix water.

The composition has extremely good adhesion and excellent anti-wash-out properties. Its consistency is usually from plastic to totally liquid. It is highly coherent and tough. The development of the strength of a grouting composition according to the invention will emerge from the annexed Figure. As is indicated by the Figure, the composition quickly hardens at normal room temperature and reaches a level of over 80 % of its maximal strength after 28 days. Even at low temperatures (exemplified by +5 °C in the Figure) the composition has a strength of over 30 MPa after 7 days.

Within the above-defined scope, the composition of the grout can be adapted to the range of use and method of application.

When the composition is extruded using larger nozzles (die size about 50 to 300 mm) for under-water repair of joints, cracks and cavities, the composition generally contains 1 to 3 parts by weight of an aggregatehaving a particle size of 0 to 0.6 mm and a smaller portion (0.5 to 2 parts by weight) of aggregate compared to this first portion, the smaller portion having a particle size of 0.5 to 1.2 mm, 1 to 3 parts by weight of ground, granulated blast-furnace slag, 0.1 to 0.5 parts by weight of an activator and/or accelerator, 0.01 to 1 parts by weight of additives and possibly admixtures and 0.1 to 1 parts by weight of mix water. The composition advantageously contains about 2 parts by weight of an aggregatehaving a particle size of 0 to 0.6 mm, about 1 part by weight of an aggregatehaving a particle size of 0.5 to 1.2 mm, about 2 parts by weight of a ground, granulated blast-furnace slag, about 0.3 parts by weight of an activator/accelerator, about 0.1 parts by weight of additives and about 0.5 parts by weight of mix water. Such a composition has a typical compressive strength of 50 MPa after 28 days.

As indicated above, the second main field of application are grouting compositions for filling cracks and cavities under water in dams, tunnels and the like, and for fortifying these. For this purpose a composition which can be injected at a pressure of at least 0.1 MPa (see below) through dies having small orifices (a diameter of about 10 to 50 mm) contains 2 to 10 parts by weight of an aggregatehaving a particle size of 0 to 0.5 mm, 1 to 3 parts by weight of ground granulated blast-furnace slag, whereby the aggregate/slag ratio is about 1.5 to 3, 0.01 to 1 parts by weight of an activator and/or accelerator, 0.01 to 1 parts by weight of additives and possibly admixtures and 0.5 to 1.0 parts of mix water. The composition advantageously contains about 4 parts by weight of an aggregatehaving a particle size of 0 to 0.5 mm, about 2 parts by weight of ground, granulated blast-furnace slag, about 0.2 parts by weight of an activator and/or accelerator, about 0.1 parts by weight of additives and about 0.5 to 1.0 parts of mix water. Such a composition has a typical compressive strength of 5 to 15 MPa after 24 hours.

Cracks in concrete and stone structures are repaired by extrusion such that the cracks at for example joints between hewn stone blocks in channel walling are filled with the composition described herein, which composition is extruded through a die connected to a hose which in turn is connected to a pump for pumping mortar. The blast-furnace slag will react in combination with the activator with the mix water, a hydration reaction occurs whereby the composition becomes tough and rapidly hardens, whereby the crack becomes water-proof.

The method according to the invention for repairing concrete or stone structures having cracks by grouting comprises the following steps:
- providing the structure with holes which open at the surface of the structure and which at least partly are in connection with the cracks, and
- filling the holes with a grouting composition which makes its way into the cracks and fills them when it hardens.

The grouting composition is injected into the holes at a pressure of at least 0.1 MPa, advantageously 1 to 200 MPa, preferably about 1.1 to 10 MPa. The pressure depends on the hardness of the bedrock/stone and on the size of the cracks. Pressures of about 0.1 to 7 MPa are typically used. As grouting pumps for achieving the required pressure, double-acting piston pumps and screw pumps can be used.

In some particularly difficult cases the cracks cannot be filled solely by injecting the present grouting composition. In these cases it is of advantage to first inject fibres or chips in advance into the cracks in order to prevent to some extent the water flow before injecting the grouting composition and to in this manner provide preventing surfaces which the grouting composition can adhere to and build a sealing layer.

The principles of the invention are illustrated by the following examples which are not to be interpreted as in a any way limiting the scope of the invention.

### Example 1

### Joint sealing compound

A sealing compound according to the invention has the following composition:

| | | |
|---|---|---|
| Sand | 0 to 0.6 mm | 2 parts by weight |
| | 0.5 to 1.2 mm | 1 part by weight |
| Binding agent | ground granulated blast-furnace slag | |
| | (Fineness Blaine 400 m²/kg) | 2 parts by weight |
| | SKJ 400 (RR) | |
| Activator | water glass solution, 45 % by w. | 0.2 parts by w. |
| Accelerator | sodium hydroxide solution, | |
| | 50 % by w. | 0.1 parts by w. |
| Additives | - | 1.6 % by w. (of the other components) |
| | Silica powder | |
| | Hydroxy ethyl cellulose | |
| | Calcium stearate | |
| | Bentonite | |
| | Fibre (polypropylene) | |

Water for mixing, water/binder ratio 0.2 to 0.3.

The cellulose derivative provides the composition with improved ductility and inner cohesion whereas the bentonite counteracts shrinkage and even otherwise acts as a plasticizer.

The composition is viscous and cohesive and has a plastic consistency. It has excellent anti-wash-out properties. The workability time of the composition is approximately 15 to 30 min and it achieves a compressive strength of 20 MPa in 24 hours.

### Example 2

### Grouting composition

A grouting composition according to the invention contains the following:

| | | |
|---|---|---|
| Sand | 0 to 0.5 mm | 4 parts by weight |
| Fly ash | | 2 parts by weight |
| Binding agent | ground granulated blast-furnace slag | |
| | (Fineness Blaine 500 m²/kg) | 1.5 - 3 parts by w. |
| | (Merit 5000, Merox) | |
| Activator | water glass solution, 45 % by w. | 0.15 parts by w. |
| Accelerator | sodium hydroxide solution, | |
| | 50 % by w. | 0.15 parts by w. |
| Additives | - | 1 to 3 % |
| | Silica powder | |
| | Calcium stearate | |
| | Bentonite | |
| | Fibre (polypropylene) | |

Water for mixing, water/binder ratio 0.2 to 1.0.

The composition is thixotropic or pseudo plastic. The fly ash provides the composition with improved flow. The compressive strength is 10 MPa after 24 hours.

### Example 3

### Filling of cracks in power plant dams by grouting

A power plant dam had been leaking for a longer period of time. Water leakage occurred from the upstream side of the dam to the downstream side and amounted to approximately 140 l/min. The leaking water came through the structure at its base, that is, at the junction between the bedrock and the dam built thereon. The dam consisted of a combination of concrete cast on site in the upstream and downstream sides, filled with earth and crushed rock.

A number of attempts had previously been made to make the dam watertight but the results had been inexistent or insignificant. During the preceding grouting attempt an organic polymer of the polyurethane type had been used. The attempt to inject polyurethane had been a failure as the grouting composition was washed away by the strong stream of water before it had managed to form a solid material.

The grouting according to the invention was performed by first drilling a hole from the crown of the dam all the way down and further about 0.5 to 1 metres into the bedrock. Next, the hole was filled with a grouting composition according to the invention (see Example 2). Once the hole had been filled with grouting composition, the pump thrust was maintained for approximately five minutes in order for the composition to have the time and chance to laterally penetrate cracks and cavities. Then the drill equipment was transferred approximately 2 to 3 metres sideways and a new hole was drilled in a similar manner as the previous hole. Hereby it was observed that layers were being drilled through in which the grouting composition had filled cracks and cavities. Next, the drill hole was grouted in the manner of the previous hole. Thereafter the procedure was repeated such that the drill holes and the grouting were carried out in a manner forming a pattern covering the entire dam and that all cracks and cavities were filled with grouting composition.

After completed grouting the flow of water had been reduced from 140 l/min to a flow which was smaller than 10 l/min. During a later examination the water leakage through the dam had ceased and the structure was dry at the earlier leakage area.

## Claims

1. A method for filling cracks in stone and concrete structures, wherein the cracks are filled with a grouting composition containing a binder which achieves setting of the composition under the influence of water, whereby the cracks are filled, **characterized by**
- using a grouting composition containing blast-furnace slag having a specific surface (Blaine) of about 100 to 800 m²/kg as a latent hydraulic binder, an alkaline component for activating the binder, additives and an aggregate having a particle size of less than 1.6 mm.

2. The method according to claim 1, **characterized by** extruding the grouting composition into the cracks.

3. The method according to claim 1, **characterized by**
- furnishing the structure with holes which open at the surface of the structure and which are at least partly connected to the cracks, and
- filling the holes with a grout which penetrates into the cracks and caulks them when it hardens.

4. The method according to claim 3, **characterized by** pumping the grouting composition into the holes at a pressure of at least 0.1 MPa.

5. The method according to any one of the previous claims, **characterized in that** the latent hydraulic binder consists of ground, granulated blast-furnace slag of a fineness of at least 200 m²/kg (Blaine).

6. The method according to any one of the claims 1 to 5, **characterized in that** the alkaline component for activating the binder consists of an alkaline agent such as a hydroxide, a carbonate or a hydrocarbonate of an alkali metal or alkali earth or an alkaline silicate, such as water-glass.

7. The method according to any one of the claims 1 to 6, **characterized in that** the additives comprise one or several of the following substances: silica powder, cellulose derivatives, calcium stearate, bentonite and organic polymer fibres, and the admixtures comprise lignosulphonate or a condensated naphthalene- or melamine-based product, or is of the intrusion aid type.

8. The method according to any one of the previous claims, **characterized in that** the grout contains fine gravel having a particle size of 0 to 1.6 mm.

9. The method according to any one of the previous claims, **characterized in that** the grout contains fly ash.

10. The method according to claim 9, **characterized in that** the fly ash has a fineness of at least 100 m²/kg (Blaine).

11. The method according to any one of the previous claims, **characterized in that** the grout is injected into the holes at a pressure of 1 to 200 MPa, preferably about 1.5 to 10 MPA.

12. The method according to any one of the previous claims, **characterized by** repairing concrete or stone structures which are in contact with water.

13. The method according to any one of the previous claims, **characterized by** repairing cracks in the bedrock in the vicinity of concrete or stone structures which are in contact with water.

14. The method according to any one of the previous claims, **characterized by** first injecting fibres or chips in advance into the cracks so as to prevent the flow of water in the cracks prior to the injection of the grout.

15. The method according to any one of the previous claims, **characterized by** using a grout containing about 15 to 80 %, preferably about 20 to 50 % binder of the combined weight of the aggregate and the binder.

16. The method according to any one of the previous claims, **characterized by** using a grouting composition containing
- 1 to 5 parts by weight of an aggregate whose particle size is 0 to 0.6 mm,
- 1 to 3 parts by weight of ground, granulated blast-furnace slag,
- 0.1 to 1 parts by weight of an alkaline component,
- 0.01 to 1 parts by weight of admixtures and
- 0.1 to 2 parts by weight of mix water.

17. A grouting composition especially for filling cracks in stone and concrete structures, **characterized in that** in contains
- blast-furnace slag having a specific surface (Blaine) of about 100 to 800 m²/kg as a latent hydraulic binder,
- an alkaline agent acting as an activator for the binder,
- aggregate having a particle size of mainly less than 1.6 mm,
- additives capable of modifying the consistency, viscosity and other such properties of the compositions, and
- water for mixing the composition.

18. The grouting composition of claim 17, **characterized in that** the latent hydraulic binder consists of ground, granulated blast-furnace slag of a fineness of at least 200 m²/kg.

19. The grouting composition of claim 17 or 18, **characterized in that** the admixture contains one or several of the following substances: silica powder, cellulose derivatives, calcium stearate, bentonite and organic polymer fibres as well as flow promoter which consists of lignosulphonate or a condensated naphthalene- or melamine-based product, or is of the intrusion aid type.

20. The grouting composition according to any one of the claims 17 to 19, **characterized in that** the grout can be extruded and contains
- 1 to 3 parts by weight of an aggregate having a particle size of 0 to 0.6 mm and a smaller amount in relation to this aggregate of
- 0.5 to 2 parts by weight of an aggregate having a particle size of 0.5 to 1.2 mm,
- 1 to 3 parts by weight of ground, granulated blast-furnace slag,
- 0.1 to 0.5 parts by weight of an alkaline component for activating the slag,
- 0.01 to 1 parts by weight of additives and possible admixtures, and
- 0.1 to 1 parts by weight of mix water.

21. The grouting composition according to any one of the claims 17 to 19, **characterized in that** the grout can be injected under pressure and contains
- 2 to 10 parts by weight of an aggregate having a particle size of 0 to 0.5 mm,
- 1 to 3 parts by weight of ground, granulated blast-furnace slag, whereby the aggregate/slag ratio is about 1.5 to 3,
- 0.01 to 1 parts by weight of an alkaline component for activating the slag,
- 0.01 to 1 parts by weight of additives and possible admixtures, and
- 0.5 to 1.0 parts of mix water.

## Patentansprüche

1. Verfahren zum Füllen von Rissen in Stein- und Betongefügen, wobei die Risse mit einer Fugenmörtelmischung gefiillt werden, die ein Bindemittel aufweist, das ein Abbinden der Zusammensetzung unter der Einwirkung von Wasser erreicht, wobei die Risse gefüllt werden, **gekennzeichnet durch**
- Verwenden einer Fugenmörtelmischung, die Hochofenschlacke mit einer spezifischen Oberfläche (Blaine) von ungefähr 100 bis 800 m²/kg als latent hydraulisches Bindemittel, einen basischen Bestandteil, der das Bindemittel aktiviert, Zusätze und einen Füllstoff, der eine Teilchengröße von unter 1,6 mm hat, aufweist.

2. Verfahren nach Anspruch 1, **dadurch gekennzeichnet, dass** die Fugenmörtelmischung in die Risse durchgedrückt wird.

3. Verfahren nach Anspruch 1, **dadurch gekennzeichnet, dass**
- das Gefüge mit Löchern versehen wird, die an der Oberfläche des Gefüges offen und wenigstens teilweise mit den Rissen verbunden sind, und
- die Löcher mit einer Fugenmischung gefüllt werden, die in die Risse eindringt und diese abdichtet, wenn sie aushärtet.

4. Verfahren nach Anspruch 3, **dadurch gekennzeichnet dass** die Fugenmörtelmischung mit einem Druck von wenigstens 0,1 MPa in die Löcher gepumpt wird.

5. Verfahren nach irgendeinem der vorgenannten Ansprüche, **dadurch gekennzeichnet, dass** das latent hydraulische Bindemittel gemahlene gekörnte Hochofenschlacke mit einer Feinheit von mindestens 200 m²/kg (Blaine) aufweist.

6. Verfahren nach irgendeinem der Ansprüche 1 bis 5, **dadurch gekennzeichnet, dass** der basische Bestandteil, mit dem das Bindemittel aktiviert wird, einen basischen Wirkstoff aufweist, wie zum Beispiel ein Hydroxid, ein Karbonat oder ein Hydrokarbonat eines basischen Metalls oder einer basischen Erde oder eines basischen Silikats, wie zum Beispiel Wasserglas.

7. Verfahren nach irgendeinem der Ansprüche 1 bis 6, **dadurch gekennzeichnet, dass** die Zusätze eine oder mehrere der folgenden Substanzen aufweisen: Quarzpulver, Zellulosederivat, Kalzium-Stearat, Bentonit und organische Polymerfasern, und die Beimischungen Ligninsulfonat oder ein kondensiertes auf Naphthalin oder Melamin basierendes Erzeugnis aufweisen.

8. Verfahren nach irgendeinem der vorgenannten Ansprüche, **dadurch gekennzeichnet, dass** der Fugenmörtel feine Körner mit einer Teilchengröße von 0 bis 1,6 mm aufweist.

9. Verfahren nach irgendeinem der vorgenannten Ansprüche, **dadurch gekennzeichnet, dass** der Fugenmörtel Flugasche ausweist.

10. Verfahren nach Anspruch 9, **dadurch gekennzeichnet, dass** die Flugasche eine Feinheit von mindestens 100 m²/kg (Blaine) hat.

11. Verfahren nach irgendeinem der vorgenannten Ansprüche, **dadurch gekennzeichnet, dass** der Fugenmörtel mit einem Druck von 1 bis 200 MPa, bevorzugt ungefähr 1,5 bis 10 MPa in die Löcher eingespritzt wird.

12. Verfahren nach irgendeinem der vorgenannten Ansprüche, **dadurch gekennzeichnet, dass** Beton- oder Steingefüge repariert werden, die in Kontakt mit Wasser sind.

13. Verfahren nach irgendeinem der vorgenannten Ansprüche, **dadurch gekennzeichnet, dass** Risse im natürlichen Gestein in der Nähe von Betonoder Steingefügen repariert wird, die sich in Kontakt mit Wasser befinden.

14. Verfahren nach irgendeinem der vorgenannten Ansprüche, **dadurch gekennzeichnet, dass** zuerst Späne und Fasern im Voraus eingebracht werden, wobei verhindert wird, dass vor dem Einspritzen des Fugenmörtels Wasser in die Risse eindringt.

15. Verfahren nach irgendeinem der vorgenannten Ansprüche, **dadurch gekennzeichnet, dass** ein Fugenmörtel verwendet wird, der ungefähr 15 bis 80 %, bevorzugt ungefähr 20 bis 50 % Bindemittel aus dem gemeinsamen Gewicht von Füllstoff und Bindemittel aufweist.

16. Verfahren nach irgendeinem der vorgenannten Ansprüche, **dadurch gekennzeichnet, dass** eine Fugenmörtelmischung verwendet wird, die aufweist
- 1 bis 5 Gewichtsanteile eines Füllstoffes, dessen Teilchengröße 0 bis 0,6 mm ist,
- 1 bis 3 Gewichtsanteile gemahlener gekörnter Hochofenschlacke,
- 0,1 bis 1 Gewichtsanteil eines basischen Bestandteils,
- 0,01 bis 1 Gewichtsanteil eines Zusatzmittels und
- 0,1 bis 2 Gewichtsanteile Anmachwassers.

17. Fugenmörtelmischung vornehmlich zum Füllen von Rissen in Stein- und Betongefügen, **dadurch gekennzeichnet, dass** sie aufweist
- Hochofenschlacke mit einer spezifischen Oberfläche (Blaine) von ungefähr 100 bis 800 m²/kg als latent hydraulisches Bindemittel,
- einen basischen Bestandteil, der das Bindemittel aktiviert,
- einen Füllstoff mit einer Teilchengröße von überwiegend unter 1,6 mm,
- Zusätze, die geeignet sind, die Konsistenz, die Viskosität und andere solcher Eigenschaften der Zusammensetzung zu verändern und
- Wasser um die Zusammensetzung zuzubereiten.

18. Fugenmörtelmischung nach Anspruch 17, **dadurch gekennzeichnet, dass** das latent hydraulische Bindemittel aus gemahlener gekörnter Hochofenschlacke mit einer Feinheit von mindestens 200 m²/kg besteht.

19. Fugenmörtelmischung nach Anspruch 17 oder 18, **dadurch gekennzeichnet, dass** die Beimischung eine oder mehrere der folgenden Substanzen aufweisen: Quarzpulver, Zellulosederivate, Kalzium-Stearat, Bentonit und organische Polymerfasern, als auch ein Flussmittel, das Ligninsulfonat oder ein kondensiertes auf Naphthalin oder Melamin basierendes Erzeugnis aufweist, oder von der Art her ein Eindringen begünstigt.

20. Fugenmörtelmischung nach irgendeinem der Ansprüche 17 bis 19, **dadurch gekennzeichnet, dass** der Fugenmörtel durchgedrückt werden kann und aufweist
- 1 bis 3 Gewichtsanteile eines Füllstoffs mit einer Teilchengröße von 0 bis 0,6 mm und eine kleinere Menge im Verhältnis zu diesem Füllstoff von
- 0,5 bis 2 Gewichtsanteilen eines Füllstoffs mit einer Teilchengröße von 0,5 bis 1,2 mm,
- 1 bis 3 Gewichtsanteile gemahlener gekörnter Hochofenschlacke,
- 0,1 bis 0,3 Gewichtsanteile eines basischen Bestandteils zum Aktivieren der Schlacke,
- 0,01 bis 1 Gewichtsanteile von Zusätzen und möglichen Beimischungen und
- 0,1 bis 1 Gewichtsanteile Anmachwasser.

21. Fugenmörtelmischung nach irgendeinem der Ansprüche 17 bis 19, **dadurch gekennzeichnet, dass** der Fugenmörtel unter Druck eingespritzt werden kann und aufweist
- 2 bis 10 Gewichtsanteile eines Füllstoffs mit einer Teilchengröße von 0 bis 0,5 mm,
- 1 bis 3 Gewichtsanteile gemahlener gekörnter Hochofenschlacke, wobei das Verhältnis Füllstoff zu Schlacke ungefähr 1,5 bis 3 ist,
- 0,01 bis 1 Gewichtsanteile eines basischen Bestandteils zum Aktivieren der Schlacke,
- 0,01 bis 1 Gewichtsanteil an Zusätzen und möglichen Beimischungen und
- 0,5 bis 1 Gewichtsanteil Anmachwasser.

## Revendications

1. Procédé pour remplir des fissures dans des structures en pierre et en béton, dans lequel les fissures sont remplies par une composition de mortier contenant un liant qui réalise la prise de la composition sous l'influence de l'eau, moyennant quoi les fissures sont remplies, **caractérisé par** le fait
- d'utiliser une composition de mortier contenant un laitier de haut fourneau ayant une surface spécifique (Blaine) d'environ 100 à 800 m²/kg comme liant hydraulique latent, un composant alcalin pour activer le liant, des additifs et un agrégat ayant une taille de particule inférieure à 1,6 mm.

2. Procédé selon la revendication 1, **caractérisé par** le fait d'extruder la composition de mortier dans les fissures.

3. Procédé selon la revendication 1, **caractérisé par** le fait de
- munir la structure de trous qui s'ouvrent à la surface de la structure et qui sont au moins partiellement reliés aux fissures, et
- remplir les trous avec un coulis qui pénètre dans les fissures les calfate lorsqu'il durcit.

4. Procédé selon la revendication 3, **caractérisé par** le fait de pomper la composition de mortier dans les trous à une pression d'au moins 0,1 MPa.

5. Procédé selon l'une quelconque des revendications précédentes, **caractérisé en ce que** le liant hydraulique latent est composé de sable de laitier granulé de haut fourneau d'une finesse d'au moins 200m/kg (Blaine).

6. Procédé selon l'une quelconque des revendications 1 à 5, **caractérisé en ce que** le composant alcalin pour activer le liant est composé d'un agent alcalin comme un hydroxyde, un carbonate ou un hydrocarbonate d'un métal alcalin ou d'une terre alcaline ou d'un silicate alcalin, comme du silicate de sodium.

7. Procédé selon l'une quelconque des revendications 1 à 6, **caractérisé en ce que** les additifs comprennent une ou plusieurs des substances suivantes : poudre de silice, dérivés de cellulose, stéarate de calcium, bentonite et fibres de polymère organique, et les adjuvants comprennent du lignosulfonate ou un produit à base de naphtaline ou de mélamine condensé, ou est du type d'aide à l'intrusion.

8. Procédé selon l'une quelconque des revendications précédentes, **caractérisé en ce que** le coulis contient du gravier fin ayant une taille de particule de 0 à 1,6 mm.

9. Procédé selon l'une quelconque des revendications précédentes, **caractérisé en ce que** le coulis contient des cendres volantes.

10. Procédé selon la revendication 9, **caractérisé en ce que** les cendres volantes ont une finesse d'au moins 100 m²/kg (Blaine).

11. Procédé selon l'une quelconque des revendications précédentes, **caractérisé en ce que** le coulis est injecté dans les trous à une pression d'1 à 200 MPa, de préférence d'environ 1,5 à 10 MPa.

12. Procédé selon l'une quelconque des revendications précédentes, **caractérisé par** le fait de réparer des structures en béton ou en pierre qui sont en contact avec de l'eau.

13. Procédé selon l'une quelconque des revendications précédentes, **caractérisé par** le fait de réparer des fissures dans le substratum rocheux au voisinage de structures en béton ou en pierre qui sont en contact avec de l'eau.

14. Procédé selon l'une quelconque des revendications précédentes, **caractérisé par** le fait d'injecter d'abord des fibres ou des copeaux au préalable dans les fissures de manière à empêcher l'écoulement de l'eau dans les fissures avant l'injection du coulis.

15. Procédé selon l'une quelconque des revendications précédentes, **caractérisé par** le fait d'utiliser un coulis contenant environ 15 à 80 %, de préférence 20 à 50 % de liant du poids combiné de l'agrégat et du liant.

16. Procédé selon l'une quelconque des revendications précédentes, **caractérisé par** le fait d'utiliser une composition de cimentation contenant
- 1 à 5 parties en poids d'un agrégat dont la taille de particule est de 0 à 0,6 mm,
- 1 à 3 parties en poids d'un sable de laitier granulé de haut fourneau,
- 0,1 à 1 partie en poids d'un composant alcalin,
- 0,01 à 1 partie en poids d'adjuvants et
- 0,1 à 2 parties en poids d'eau de gâchage.

17. Composition de mortier spécialement pour remplir des fissures dans des structures en pierre et en béton, **caractérisée en ce qu'**elle contient
- du laitier de haut fourneau ayant une surface spécifique (Blaine) d'environ 100 à 800 m²/kg comme liant hydraulique latent,
- un agent alcalin agissant comme activateur pour le liant,
- un agrégat ayant une taille de particule essentiellement inférieure à 1,6 mm,
- des additifs capables de modifier la consistance, la viscosité et d'autres propriétés de ce genre des compositions, et
- de l'eau pour mélanger la composition.

18. Composition de mortier selon la revendication 17, **caractérisée en ce que** le liant hydraulique latent est composé de sable de laitier granulé de haut fourneau d'une finesse d'au moins 200 m²/kg.

19. Composition de mortier selon la revendication 17 ou 18, **caractérisée en ce que** l'adjuvant contient une ou plusieurs des substances suivantes : poudre de silice, dérivés de cellulose, stéarate de calcium, bentonite et fibres de polymère organique ainsi qu'un promoteur d'écoulement qui est composé de lignosulfonate ou d'un produit à base de naphtaline ou de mélamine condensé, ou est du type d'aide à l'intrusion.

20. Composition de mortier selon l'une quelconque des revendications 17 à 19, **caractérisée en ce que** le coulis peut être extrudé et contient
- 1 à 3 parties en poids d'un agrégat ayant une taille de particule de 0 à 0,6 mm et une plus petite quantité par rapport à cet agrégat de
- 0,5 à 2 parties en poids d'un agrégat ayant une taille de particule de 0,5 à 1,2 mm,
- 1 à 3 parties en poids de sable de laitier granulé de haut fourneau,
- 0,1 à 0,5 parties en poids d'un composant alcalin pour activer le laitier,
- 0,01 à 1 partie en poids d'additifs et d'adjuvants possibles, et
- 0,1 à 1 partie en poids d'eau de gâchage.

21. Composition de mortier selon l'une quelconque des revendications 17 à 19, **caractérisée en ce que** le coulis peut être injecté sous pression et contient
- 2 à 10 parties en poids d'un agrégat ayant une taille de particule de 0 à 0,5 mm,
- 1 à 3 parties en poids de sable de laitier granulé de haut fourneau, moyennant quoi le rapport agrégat/laitier est d'environ 1,5 à 3,
- 0,01 à 1 partie en poids d'un composant alcalin pour activer le laitier,
- 0,01 à 1 partie en poids d'additifs et d'adjuvants possibles, et
- 0,5 à 1,0 parties en poids d'eau de gâchage.
